Europäisches Patentamt

European Patent Office

Office européen des brevets

(19)

(11) Veröffentlichungsnummer: **0 177 029 B1**

(12) **EUROPÄISCHE PATENTSCHRIFT**

(45) Veröffentlichungstag der Patentschrift: **20.06.90**

(51) Int. Cl.⁵: **B 62 D 33/06**

(21) Anmeldenummer: **85112462.8**

(22) Anmeldetag: **02.10.85**

(54) Vorrichtung zur gefederten Lagerung einer Schlepperkabine.

(30) Priorität: **03.10.84 DE 3436169**

(43) Veröffentlichungstag der Anmeldung:
**09.04.86 Patentblatt 86/15**

(45) Bekanntmachung des Hinweises auf die
Patenterteilung:
**20.06.90 Patentblatt 90/25**

(84) Benannte Vertragsstaaten:
**AT DE FR GB**

(56) Entgegenhaltungen:
**EP-A-0 019 498**
**DE-A-2 801 261**
**DE-A-3 000 606**
**GB-A-2 042 676**

**AUTOMOTIVE ENGINEERING; Band 86, Nr. 3,
März 1978, Seiten 60-63, New York, US; "What's
new with COE's?"**
**AUTOMOBILTECHNISCHE ZEITSCHRIFT, Band
79, Nr. 7/8, 1977, Seiten 317-319, Stuttgart; J.'T
HART: "Abgefederte Kabine für ungefederte
Geländefahrzeuge"**

(73) Patentinhaber: **Klöckner-Humboldt-Deutz
Aktiengesellschaft
Deutz-Mülheimer-Strasse 111 Postfach 80 05 09
D-5000 Köln 80 (DE)**

(72) Erfinder: **Komp, Hermann-Josef, Dipl.-Ing.
Im Kronenberg 14
D-5358 Bad Münstereifel (DE)**

# Beschreibung

Die Erfindung bezieht sich auf eine Vorrichtung zur gefederten Lagerung einer Kabine eines Schleppers auf dem selbsttragend oder in Rahmenbauweise ausgeführten Fahrgestell, mit drei federnden Lagerstellen, von denen zumindest eine langhubig federnd ausgebildet ist, und mit einem etwa dreieckförmigen, um eine quer zur Fahrzeuglängsachse verlaufenden Achse am Fahrgestell drehbar gelagerten Lenker, der über ein an seinem freien Ende sitzendes Kugelgelenk an der Kabine angreift.

Es ist aus der EP-A-0 019 498 eine Vorrichtung der genannten Art zur gefederten Lagerung einer Fahrzeugkabine bekanntgeworden, bei der ebenfalls drei federnde Lagerstellen vorgesehen sind. Zwei dieser Lager sind als einfache Gummilager ausgebildet und stützen die Kabine im hinteren Bereich beiderseits ab, während die Kabine vorn über ein Kugelgelenk auf einem an einem Dreieckslenker geführten langhubigen Federelement lagert. Der Dreieckslenker ist etwa mittig unter der Kabine am Fahrgestell um eine quer verlaufende Achse drehbar angelenkt. Außerdem ist die Kabine vorn beiderseits des Kugelgelenks durch eine quer zur Längsrichtung des Fahrzeugs verlaufende, beiderseits am Fahrgestell gelagerte Drehstabfeder abgestützt. Bei dieser bekannten Vorrichtung sind jedoch nur geringe Federwege des hinteren Kabinenteils über die beiden hinteren Gummilager möglich, so daß in erster Linie nur eine Abfederung der Nickbewegungen der Kabine um die hinteren Lagerpunkte erreicht wird. Der entscheidende Nachteil dieser Anordnung liegt darin, daß die besonders großen vertikalen Stoß- und Schwingungsanregungen auf die Fahrerkabine, die im ausgeführten Beispiel insbesondere über die Hinterachse eingeleitet werden, nicht im erforderlichen Maße abgebaut werden können.

Der Erfindung liegt die Aufgabe zugrunde, für eine Schlepperkabine eine Vorrichtung der eingangs umrissenen Art zu schaffen, die eine ausreichende Bewegungsfreiheit der gesamten Kabine insbesondere in vertikaler Richtung, zugleich aber auch in Nick- und Wankrichtung zuläßt, um die Schwingungsbelastung des Fahrers unter allen Betriebsbedingen wirksam reduzieren zu können.

Die Aufgabe wird erfindungsgmäß gelöst durch die nachfolgenden Merkmale:

a) das Kugelgelenk greift im bzw. nahe dem Schwerpunkt der Kabine an dieser an,

b) die Kabine ist gegen Drehung um ihre Hochachse durch eine enffernt vom Schwerpunkt angelenkte Stütze gesichert und

c) die federnden Lagerstellen zwischen der Kabine und dem Fahrgestell sind als Feder-Dämpfungselemente (Federbeine) ausgebildet.

Bei einer derartigen Vorrichtung wird mit einfachen Mitteln erreicht, daß die Kabine zur Abfederung von Stößen in Hub-, Nick- und Wankrichtung stets ausreichende Bewegungsfreiheit hat. Gleichzeitig sind damit alle übrigen Freiheitsgrade gefesselt, so daß unerwünschte Bewegungen der Kabine, die die Fahrsicherheit beeinträchtigen könnten, vermieden werden. Ferner bewirkt die Plazierung des Kugelgelenks im bzw. nahe dem Schwerpunkt, daß z. B. bei Anfahr- und Bremsvorgängen sowie bei Fahrten am Hang keine bzw. nur eine geringe Neigung der Kabine um die Quer- und Längsachse auftritt. Auf diese Weise wird eine sichere Kontrollierbarkeit des Fahrzeugs auch unter erschwerten Einsatzbedingungen erreicht.

Die Lösung der Aufgabe kann aber auch in vorteilhafter Weise ausgeführt sein nach den folgenden Merkmalen:

a) das Kugelgelenk greift im bzw. nahe dem Schwerpunkt der Kabine an dieser an,

b) eine federnde Lagerstelle ist als Feder-Dämpfungselement ausgebildet und

c) je eine in Querrichtung gegenüberliegend an der Kabine angeordnete federnde Lagerstelle sind Teile einer gemeinsamen Drehstabfeder.

Bei der zuletzt genannten Lösung der Aufgabe kann die Kabine gegen Drehung um ihre Hochachse zusätzlich durch eine Stütze abgesichert sein.

Es hat sich konstruktiv als sehr vorteilhaft erwiesen, wenn der Lenker im hinteren Bereich der Kabine am Fahrgestell gelagert ist.

Bei besonderen Anwendungsfällen kann es zweckdienlich sein, wenn der Lenker über seine Drehachse drehelastisch am Fahrgestell gelagert ist. Dabei ist es insbesondere im Hinblick auf eine optimale Körperschallisolation zwischen dem Fahrgestell und der Kabine vorteilhaft, wenn die drehelastische Lagerung des Lenkers als Metall-Gummi-Element ausgebildet ist.

Schließlich ist es zur Stabilisierung von Bewegungen der Kabine auch zweckmäßig, wenn zwischen dem Fahrgestell und der Kabine an dieser mit Abstand vom Kugelgelenk ein auf Nickbewegungen der Kabine ansprechendes Dämpfungselement angeordnet ist.

Zwei Ausführungsbeispiele der Erfindung werden im nachfolgenden anhand der Zeichnung näher beschrieben. Es zeigt:

Fig. 1 teils in Seitenansicht, teils im Schnitt eine gefederte Kabinenlagerung gemäß der Erfindung;

Fig. 2 eine Draufsicht auf die Kabinenlagerung gemäß Fig. 1;

Fig. 3 ein anderes Ausführungsbeispiel einer gefederten Kabinenlagerung in Draufsicht.

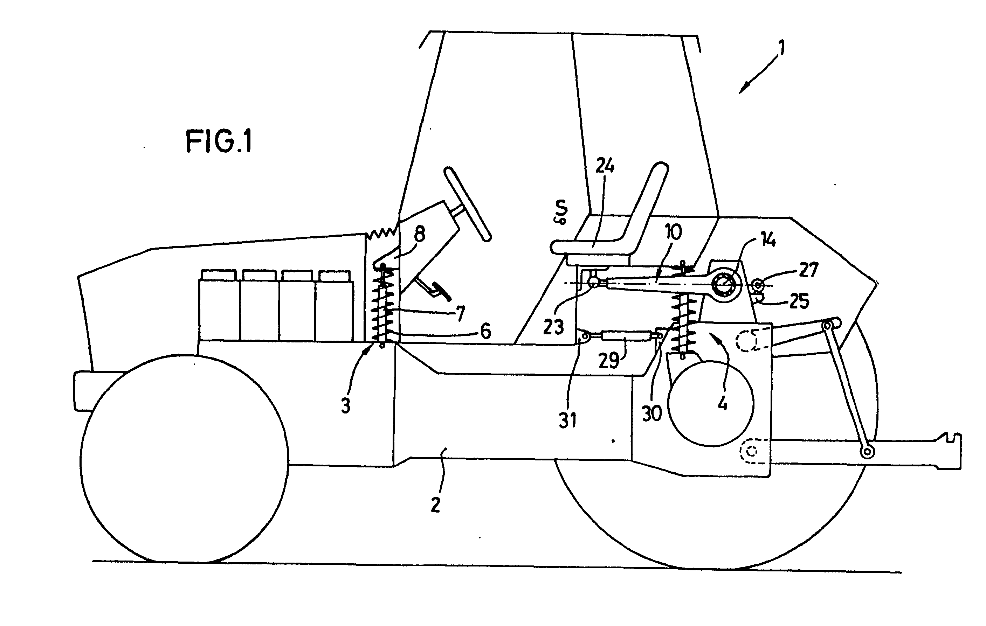

In Fig. 1 ist ein Schlepper mit selbsttragender Fahrerkabine 1 dargestellt, die federnd auf einem ebenfalls selbsttragenden Schlepperrumpf 2 abgestützt ist. Als federnde Stützeinheiten sind drei Feder-Dämpfungselemente 3, 4 und 5 (Federbeine) vorgesehen, die aus je einer Spiralfeder 6 mit zentral darin angeordnetem Stoßdämpfer 7 bestehen. Das eine Feder-Dämpfungselement 3 ist im vorderen Bereich der Fahrerkabine 1 zwischen einer mit dieser verbundenen Konsole 8 und dem Schlepperrumpf 2 angeordnet.

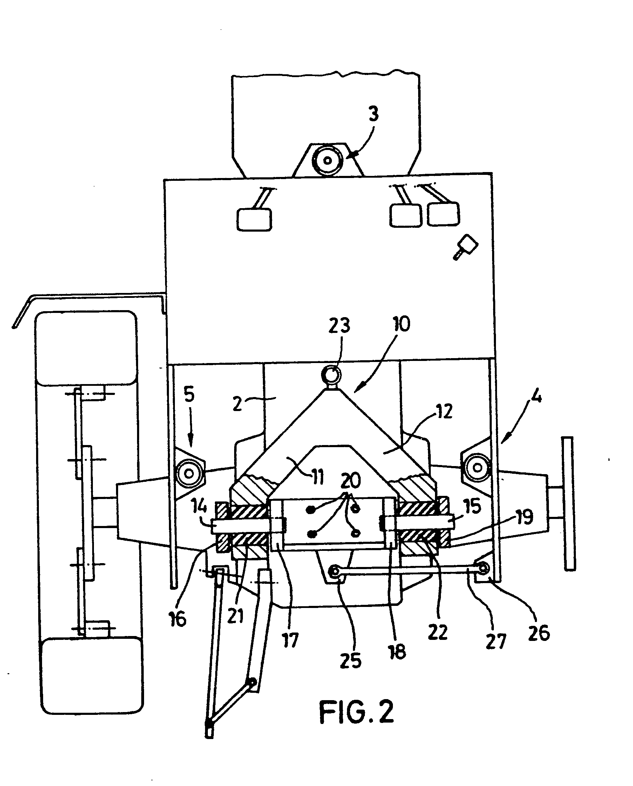

Die beiden anderen Feder-Dämpfungselemente 4 und 5 stützen den hinteren Bereich der Fahrerkabine 1 ab und greifen gemäß Fig. 2 beiderseits nahe der Seitenwände an Stützlagern am Boden der Fahrerkabine 1 an.

Auf dem Schlepperrumpf 2 ist unterhalb des hinteren Bereichs der Fahrerkabine 1 ein dreieckförmiger Lenker 10 horizontal gelagert, der um eine quer zur Längsrichtung des Fahrzeugs verlaufende Achse schwenkbar ist. Der Lenker 10 hat entsprechend seiner Dreiecksform zwei nach hinten gerichtete Arme 11 und 12, die an ihren Enden parallel zueinander verlaufen und hier über je einen Zapfen 14 bzw. 15 drehbar in Lager 16, 17 bzw. 18, 19 eingreifen. Zur Befestigung der Lager 16 bis 19 auf dem Schlepperrumpf 2 dienen Schrauben 20. In den Lagerbereichen des Lenkers 10 sind zwischen den Armen 11 und 12 sowie dem entsprechenden Zapfen 14 bzw. 15 Gummielemente 21 bzw. 22 eingeschaltet, die mit den Armen 11, 12 sowie den zugeordneten Zapfen 14, 15 zu drehelastischen Metall-Gummi-Elementen verbunden sind. Die beiden Zapfen 14 und 15 greifen entweder drehbar oder drehfest in die Lager 16, 17 bzw. 18, 19 ein. Bei einem drehfesten Eingriff der Zapfen 14, 15 ergibt sich über die Metall-Gummi-Elemente 21, 22 eine drehelastische Abstützung des Lenkers 10 gegenüber dem Schlepperrumpf 2. Am Lenker 10 sitzt vorn ein Teil eines Kugelgelenks 23, dessen anderer Teil an der Fahrerkabine 1 nahe deren Schwenkpunkt S angreift. Der Schwerpunkt S der Fahrerkabine 1 liegt etwa oberhalb der Vorderkante des Fahrersitzes 24. Um das Kugelgelenk 23 möglichst nahe an den Schwerpunkt S der Fahrerkabine 1 anlenken zu können, ist ein Fahrersitz 24 vorgesehen, der keine der üblichen Vertikalfederungseinrichtungen aufweist. Die Anordnung des Kugelgelenkes 23 nahe am Schwerpunkt S der Fahrerkabine 1 hat den Vorteil einer großen Nick- und Wankstabilität der Fahrerkabine.

Zur Vermeidung von Drehbewegungen der Fahrerkabine 1 um ihre Hochachse ist zwischen einer rumpffesten Konsole 25 am Schlepperrumpf 2 und einer an der Fahrerkabine 1 seitlich befestigten Konsole 26 ein beiderseits mit Kugelgelenken versehener Stab 27 angelenkt. Ferner ist gemäß Fig. 1 unterhalb des Lenkers 10 ein Schwingungsdämpfer 29 angeordnet, der einerseits an einer am Schlepperrumpf 2 sitzenden Konsole 30 und andererseits mit Abstand vom Kugelgelenk 23 an einer an der Fahrerkabine 1 ortsfesten Konsole 31 angreift. Durch den Schwingungsdämpfer 29 werden Nickschwingungen der Fahrerkabine 1, wie sie insbesondere beim Anfahren und Abbremsen des Fahrzeugs verstärkt auftreten können, weitgehend vermieden.

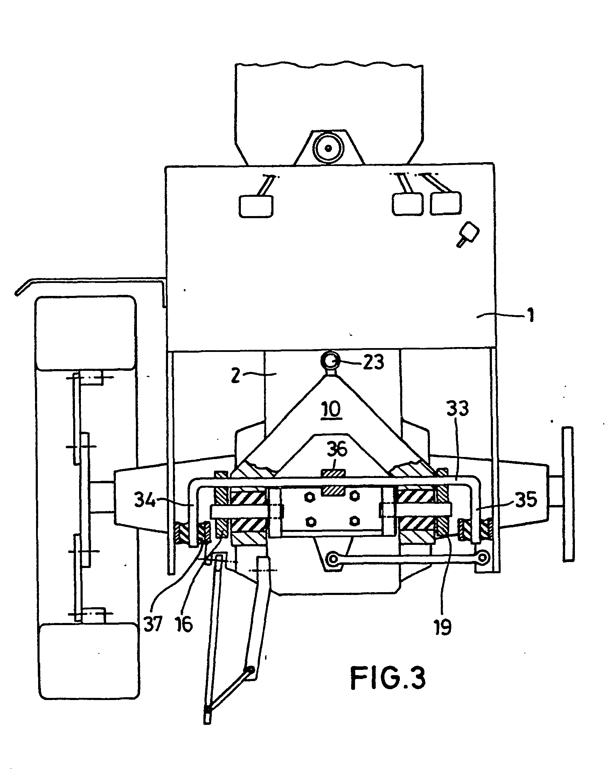

Bei der Vorrichtung gemäß Fig. 3 ist anstelle der im vorhergehenden Ausführungsbeispiel an den hinteren Feder-Dämpfungselementen 4 und 5 vorgesehenen Schraubenfedern 6 eine Drehstabfeder 33 angeordnet, die sich über die gesamte Breite der Fahrerkabine 1 erstreckt. Die Drehstabfeder 33 ist in den nach vorn verlängerten Lagerteilen 16 und 19 der beiden Zapfen 14 und 15 drehbar gelagert und ferner mittig in einem am Schlepperrumpf 2 ortsfesten Halter 36 drehfest verspannt. Die seitlichen Enden 34, 35 der Drehstabfeder 33 sind nach hinten abgewinkelt und liegen als federnde Lagerstellen 37 am Kabinenboden oder dergl. an. Auch bei Verwendung einer solchen Drehstabfeder sind zusätzlich Dämpfungselemente erforderlich, die jedoch hier nicht dargestellt sind.

## Patentansprüche

1. Vorrichtung zur gefederten Lagerung einer Kabine eines Schleppers auf dem selbsttragend oder in Rahmenbauweise ausgeführten Fahrgestell, mit drei federnden Lagerstellen, von denen zumindest eine langhubig federnd ausgebildet ist, und mit einem etwa dreieckförmigen, um eine quer zur Fahrzeuglängsachse verlaufenden Achse am Fahrgestell drehbar gelagerten Lenker, der über ein an seinem freien Ende sitzendes Kugelgelenk an der Kabine angreift, dadurch gekennzeichnet,

a) daß das Kugelgelenk (23) im bzw. nahe dem Schwerpunkt (S) der Kabine (1) an dieser angreift,

b) daß die Kabine (1) gegen Drehung um ihre Hochachse durch eine entfernt vom Schwerpunkt (S) angelenkte Stütze (27) gesichert ist und

c) daß die federnden Lagerstellen zwischen der Kabine und dem Fahrgestell als Feder-Dämpfungselemente (3, 4 und 5) (Federbeine) ausgebildet sind.

2. Vorrichtung zur gefederten Lagerung einer Kabine eines Schleppers auf dem selbsttragend oder in Rahmenbauweise ausgeführten Fahrgestell, mit drei federnden Lagerstellen, von denen zumindest eine langhubig federnd ausgebildet ist, und mit einem etwa dreieckförmigen, um eine quer zur Fahrzeuglängsachse verlaufenden Achse am Fahrgestell drehbar gelagerten Lenker, der über ein an seinem freien Ende sitzendes Kugelgelenk an der Kabine angreift, dadurch gekennzeichnet,

a) daß das Kugelgelenk (23) im bzw. nahe dem Schwerpunkt (S) der Kabine (1) an dieser angreift,

b) daß eine federnde Lagerstelle (3) als Feder-Dämpfungselement ausgebildet ist und

c) daß je eine in Querrichtung gegenüberliegend an der Kabine (1) angeordnete federnde Lagerstelle (34, 35) Teile einer gemeinsamen Drehstabfeder (33) sind.

3. Vorrichtung nach Anspruch 2, dadurch gekennzeichnet, daß die Kabine (1) gegen Drehung um ihre Hochachse durch eine außerhalb der Kabine angeordnete Stütze (27) zusätzlich abgesichert ist.

4. Vorrichtung nach einem der vorhergehenden Ansprüche, dadurch gekennzeichnet, daß der Lenker (10) im hinteren Bereich der Kabine (1) am Fahrgestell (2) gelagert ist.

5. Vorrichtung nach einem der vorhergehenden Ansprüche, dadurch gekennzeichnet, daß der Lenker (10) über seine Drehachse drehelastisch am Fahrgestell (2) gelagert ist.

6. Vorrichtung nach einem der vorhergehenden Ansprüche, dadurch gekennzeichnet, daß die drehelastische Lagerung des Lenkers (10) als Metall-Gummi-Element (11, 14, 21 bzw. 12, 15, 22) ausgebildet ist.

7. Vorrichtung nach einem der vorhergehenden Ansprüche, dadurch gekennzeichnet, daß zwischen dem Fahrgestell (2) und der Kabine (1) an dieser mit Abstand vom Kugelgelenk (23) ein auf Nickbewegungen der Kabine (1) ansprechendes Dämpfungselement (29) angeordnet ist.

## Revendications

1. Dispositif pour le montage élastique d'une cabine de tracteur sur un châssis auto-porteur ou à cadre, avec trois points d'appui élastiques dont au moins l'un est à course longue et un bras sensiblement triangulaire tournant sur un axe transversal à l'axe longitudinal du véhicule sur le châssis, bras qui agit sur la cabine par l'intermédiaire d'une articulation à rotule prévue à son extrémité libre, dispositif caractérisé en ce que:

a) l'articulation à rotule (23) agit sur la cabine (1) au niveau de son centre de gravité (S) ou à proximité de celui-ci,

b) la cabine (1) est bloquée en rotation sur son axe vertical par une jambe (27) éloignée de son centre de gravité (S) et,

c) les paliers élastiques entre la cabine et le châssis sont des éléments ressorts/amortisseurs (3, 4, 5) (jambes à ressort).

2. Dispositif pour le montage élastique d'une cabine de tracteur sur un châssis autoporteur ou en forme de cadre avec trois points d'appuis élastiques dont au moins un (1) est élastique à course longue, et avec un bras sensiblement triangulaire, monté à rotation sur le châssis autour d'un axe transversal à l'axe longitudinal du véhicule, bras qui agit sur la cabine par l'intermédiaire d'une articulation à rotule prévue à son extrémité libre, dispositif caractérisé en ce que:

a) l'articulation à rotule (23) agit sur la cabine (1) au niveau de son centre de gravité (S) ou à proximité de celui-ci,

b) un appui élastique (3) est réalisé sous la forme d'un élément ressort/amortisseur,

c) un point d'appui élastique (34, 35) prévu en regard de la cabine (1) de manière opposée dans la direction transversale, est constitué par un ressort de torsion commun (33).

3. Dispositif selon la revendication 2, caractérisé en ce que la cabine (1) est bloquée en rotation sur son axe vertical par un bras (27) prévu à l'extérieur de la cabine.

4. Dispositif selon l'une des revendications précédentes, caractérisé en ce que le bras (10) est monté sur le châssis (2) dans la zone arrière de la cabine (1).

5. Dispositif selon l'une des revendications précédentes, caractérisé en ce que le bras (10) est monté élastiquement en rotation sur le châssis (2) au niveau de son axe de rotation.

6. Dispositif selon l'une des revendications précédentes, caractérisé en ce que l'appui élastique en rotation du bras (10) est en forme d'élément métal/caoutchouc (11, 14, 21 ou 12, 15, 22).

7. Dispositif selon l'une des revendications précédentes, caractérisé en en ce qu'entre le châssis (2) et la cabine (1), il est prévu à une certaine distance du bras à rotule (23), un élément-amortisseur (29) sollicité par les mouvements d'inclinaison de la cabine (1).

## Claims

1. Means for resiliently mounting a tractor cabin on the chassis which is self-supporting or in framework construction, the means comprising three resilient bearings, at least one of which is resilient with a long stroke, and a substantially triangular guide rod rotatably mounted on the chassis around a shaft extending transversely to the longitudinal axis of the vehicle, a ball-and-socket joint being disposed on the free end of the guide rod and engaging the cabin, characterised in that

a) the ball-and-socket joint (23) engages the cabin (1) at or near the centre of gravity (S) thereof,

b) the cabin (1) is prevented from rotating around its vertical axis by a bracket (27) pivoted at a distance from the centre of gravity (S), and

c) the resilient bearings between the cabin and the chassis are constructed as spring shock-absorption elements (spring legs) (3, 4 and 5).

2. Means for resiliently mounting a tractor cabin on the chassis which is self-supporting or in framework construction, the means comprising three resilient bearings, at least one of which is made resilient with a long stroke, and a substantially triangular guide rod rotatably mounted on the chassis around a shaft extending transversely to the longitudinal axis of the vehicle, a ball-and-socket joint being disposed on the free end of the guide rod and engaging the cabin, characterised in that

a) the ball-and-socket joint (23) engages the cabin (1) at or near the centre of gravity (S) thereof,

b) one resilient bearing (3) is in the form of a spring shock-absorbing element, and

c) resilient bearings (34, 35) disposed on the cabin (1) and opposite one another in the transverse direction are parts of a common torsion-bar spring (33).

3. Means according to claim 2, characterised in that the cabin (1) is additionally protected from rotating around its vertical axis by a bracket (27) disposed outside the cabin.

4. Means according to any of the preceding claims, characterised in that the guide rod (10) is mounted on the chassis (2) in the rear region of the cabin (1).

5. Means according to any of the preceding claims, characterised in that the guide rod (10) is mounted via its pivot in torsionally resilient manner on the chassis (2).

6. Means according to any of the preceding claims, characterised in that the torsionally resilient bearing of the guide rod (10) is in the form of a metal-rubber element (11, 14, 21 or 12, 15, 22).

7. Means according to any of the preceding claims, characterised in that a shock-absorbing element (29) responding to pitching movements of the cabin (1) is disposed on the cabin at a distance from the ball-and-socket joint (23).

FIG.1

FIG.2

FIG.3